# EUROPÄISCHE PATENTSCHRIFT

(11) **EP 1 171 717 B1**
(45) Veröffentlichungstag und Bekanntmachung des Hinweises auf die Patenterteilung: **27.04.2005**
(21) Anmeldenummer: 01913722.3
(22) Anmeldetag: 27.02.2001
(51) Int. Cl.: F16C 11/06, G01M 13/04, G01N 3/56

(54) **KUGELGELENK MIT VERSCHLEISSPRÜFUNG**
BALL JOINT WITH WEAR TESTING
JOINT A ROTULE AVEC ESSAI D'USURE

(30) Priorität: 28.02.2000 DE 10009054
(43) Veröffentlichungstag der Anmeldung: 16.01.2002
(73) Patentinhaber: ZF Lemförder Metallwaren AG, 49441 Lemförde (DE)
(72) Erfinder: HEIDEMANN, Manfred, 49191 Belm-Vehrte (DE)
(86) Internationale Anmeldenummer: PCT/DE2001/000732
(87) Internationale Veröffentlichungsnummer: WO 2001/065130

(56) Entgegenhaltungen:
- DE-C- 19 546 084
- PATENT ABSTRACTS OF JAPAN vol. 005, no. 050 (M-062), 9. April 1981 (1981-04-09) & JP 56 006911 A (HINO MOTORS LTD), 24. Januar 1981 (1981-01-24)
- PATENT ABSTRACTS OF JAPAN vol. 013, no. 120 (P-846), 24. März 1989 (1989-03-24) & JP 63 292001 A (MUSASHI SEIMITSU IND CO LTD), 29. November 1988 (1988-11-29)
- PATENT ABSTRACTS OF JAPAN vol. 011, no. 360 (M-645), 25. November 1987 (1987-11-25) & JP 62 137407 A (MUSASHI SEIMITSU IND CO LTD), 20. Juni 1987 (1987-06-20)

## Beschreibung

Die Erfindung betrifft ein Kugelgelenk vorzugsweise für Fahrwerksaufhängungen oder Lenkungen von Kraftfahrzeugen mit einem Gelenkgehäuse und einem Gelenkzapfen, der mittels einer kugelförmigen Lagerfläche in einer ein- oder mehrteiligen Lagerschale dreh- und auslenkbar gelagert ist, wobei die Lagerschale ihrerseits im Gelenkgehäuse festgelegt ist und wobei Gelenkgehäuse oder Gelenkzapfen gegenüber der Fahrwerksaufhängung elektrisch isoliert festgelegt sind.

Kugelgelenke der gattungsgemäßen Art sind seit langem bekannt und werden insbesondere in der Kraftfahrzeugindustrie in großen Stückzahlen eingesetzt. Während des Betriebes eines Kraftfahrzeuges unterliegen die dort eingebauten Kugelgelenke durch entsprechende Beanspruchung einem natürlichen Verschleiß. Die Verschleißgrenze und Lebensdauer eines Kugelgelenkes ist dann erreicht, wenn die zwischen Kugelzapfen und Gehäuse angeordnete Lagerschale ihre Lagerungsfunktion infolge ihres Verschleisses oder ihrer sonstigen Abnutzung großflächig oder partiell nicht mehr erfüllen kann. Verstärkter Verschleiss ist häufig die Folge von undichten Abdichtsystemen, also beispielsweise wenn der Dichtungsbalg beschädigt wurde und in Folge dessen Feuchtigkeit beziehungsweise Verunreinigungen unmittelbar in das Gelenkinnere eindringen konnten. Ist die Lagerschale derart abgenutzt, könnte sich der Kugelzapfen letztlich sogar vollständig aus dem Gelenk lösen. Die Funktion eines Kugelgelenkes, dessen Lebensdauergrenze erreicht ist, kann somit erheblich eingeschränkt sein oder zum Totalausfall führen, was insbesondere bei in sicherheitsrelevanten Positionen eingesetzten Kugelgelenken nicht eintreten darf Ein derartiger Totalausfall kann ernste Folgen für die Funktionsfähigkeit angrenzender Bauteile haben und u. U. für den Nutzer eines betroffenen Kraftfahrzeuges lebensgefährlich sein.

Mit der DE 195 46 084 C1 wird ein Verfahren zur Prüfung des Verschschleißzustandes eines Kugelgelenkes offenbart, bei welchem das Gelenkgehäuse und der Gelenkzapfen mittels einer elektrischen Kontaktierung auf ein unterschiedliches Ladungsniveau gebracht werden. Anhand des zeitlichen Verlaufs der Ladungsdifferenz zwischen dem Gelenkgehäuse und dem Gelenkzapfen wird der Verschleißzustand einer zwischen dem Gelenkgehäuse und dem Gelenkzapfen angeordneten Lagerschale ermittelt. Nachteilig an dieser Lösung ist insbesondere, dass dieses Verfahren lediglich am ausgebauten Kugelgelenk durchgeführt werden kann und so lediglich eine Momentbetrachtung des Verschleißzustandes des Kugelgelenkes darstellt, aber keine Aussage erlaubt, wann das Kugelgelenk im Fahrbetrieb tatsächlich verschlissen ist und ausgetauscht werden muß.

Aufgabe der vorliegenden Erfindung ist es daher, ein Kugelgelenk der gattungsgemäßen Art so weiterzuentwickeln, dass die Abnutzung der Kugelschale des Kugelgelenkes durch geeignete Maßnahmen mitgeteilt wird, so dass vor Entstehen größerer Gefahrenpotentiale ein rechtzeitiger Austausch des betreffenden Kugelgelenkes vorgenommen werden kann.

Diese Aufgabe wird in Zusammenschau mit den gattungsbildenden Merkmalen durch die im kennzeichnenden Teil des Anspruches 1 angegebene technische Lehre gelöst.

Hierbei ist vorgesehen, dass im Einbauzustand im Fahrzeug das Gelenkgehäuse und der Gelenkzapfen mittels elektrischer Kontaktierung an eine Potentialdifferenzmeßeinrichtung angeschlossen sind, und die kugelförmige Lagerfläche des Gelenkzapfens und ihre korrespondierende Gegenlagerfläche im Gelenkgehäuse gegeneinander elektrisch isoliert ausgebildet sind.

Diese erfindungsgemäße Ausbildung bewirkt, dass durch die elektrischen Kontaktanschlüsse zwischen Gelenkgehäuse und Gelenkzapfen bei intaktem Kugelgelenk eine Potentialdifferenz herrscht, welche in dem Moment beseitigt wird, in der die Isolierung zwischen Gelenkzapfen und Gelenkgehäuse infolge Verschleiß an einer Stelle erheblich reduziert oder aufgehoben wird. Dies geschieht üblicherweise dadurch, dass die vorzugsweise aus einem Kunststoffmaterial hergestellte, zwischen Gelenkzapfen und Gelenkgehäuse angeordnete Lagerschale ihre isolierende Funktion infolge Verschleiß an einer Stelle der Lagerung nicht mehr wahrnehmen kann. An dieser Stelle entsteht eine elektrisch leitende Verbindung zwischen Gelenkzapfen und Gelenkgehäuse, wodurch die Potentialdifferenz zwischen beiden Bauteilen aufgehoben wird. Die angeschlossene Potentialdifferenzmesseinrichtung überwacht permanent den elektrischen Zustand des Kugelgelenkes und kann im Falle einer Potentialdifferenzänderung beispielsweise eine nachgeschaltete Anzeigevorrichtung ansteuern, die dem Kraftfahrzeugbenutzer eine notwendige Reparatur des verschlissenen Kugelgelenkes anzeigen kann.

Darüber hinaus kann mittels einer erfindungsgemäßen Potentialdifferenzmesseinrichtung auch die zunehmende Abnutzung der Lagerschale dargestellt werden, sodass ein Austausch des Kugelgelenkes auch schon vor einem metallischen Kontakt, d.h. einer unmittelbaren elektrischen Verbindung möglich ist.

Im Rahmen einer weiteren speziellen Ausgestaltung des Erfindungsgegenstandes kann die Lagerfläche des Gelenkzapfens eine elektrisch nicht leitende Beschichtung aufweisen. Diese Ausgestaltung ist dann notwendig, wenn die zwischengeschaltete Lagerschale ihre isolierende Funktion aufgrund einer speziellen Materialwahl nicht erfüllen kann.

Im Folgenden wird ein Ausführungsbeispiel des Erfindungsgegenstandes anhand der beigefügten Zeichnungen näher erläutert. Es zeigt:
- Figur 1: ein erfindungsgemäßes Kugelgelenk in Teilschnittdarstellung im Einbauzustand an einer Fahrteugaufhängung und
- Figur 2a, b: eine vergrößerte Darstellung des Details A aus Figur 1 bei einem Kugelgelenk im Neuzustand und am Ende seiner Lebensdauer.

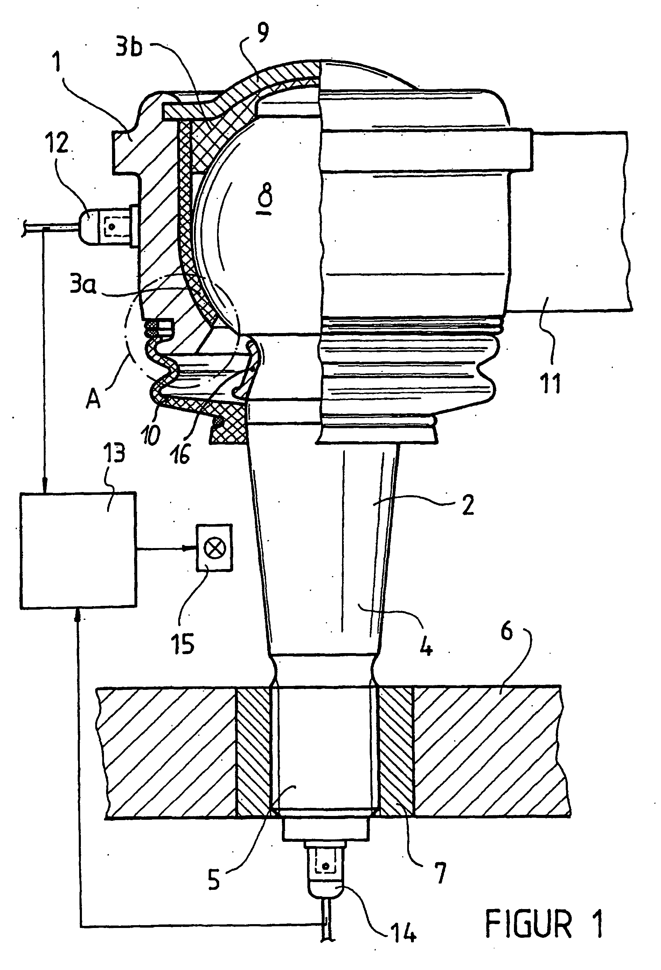

Das in Figur 1 dargestellte Kugelgelenk besteht im Wesentlichen aus einem Gelenkgehäuse 1, einem Gelenkzapfen 2 und einer zwischen Gelenkzapfen 2 und Gelenkgehäuse 1 angeordneten zweiteiligen Lagerschale 3a, 3b. Der Gelenkzapfen 2 weist einen Schaftteil 4 auf, welcher mit Hilfe eines Gewindeansatzes 5 in einem karosserieseitigen Träger 6 aufgenommen ist. Die Aufnahme des Gewindeansatzes 5 im karosserieseitigen Träger 6 erfolgt unter Zwischenschaltung einer Gewindebuchse 7, die aus elektrisch isolierendem Material, vorzugsweise Kunststoff, hergestellt wurde. Darüber hinaus sind natürlich auch andere Möglichkeiten der Isolierung denkbar. An dem dem Gewindeansatz 5 abgewandten anderen Ende des Schaftteiles 4 befindet sich eine kugelförmige Lagerfläche 8, welche in der insgesamt mit 3 bezeichneten Lagerschale, welche korrespondierend hohlkugelförmig ausgebildet ist, dreh- und auslenkbar aufgenommen ist. Die Lagerschale 3 wiederum ist im Gelenkgehäuse 1 in einer im Wesentlichen zylindrisch Bohrung aufgenommen, wobei das Gelenkgehäuse 1 nach dem Einsetzen von Lagerschale 3 und Gelenkzapfen 2 durch einen Gehäusedeckel 9 verschlossen ist. Am entgegengesetzten Ende des Gelenkgehäuses 1 ist zwischen diesem und dem Gelenkzapfen 2 zur Abdichtung ein vorzugsweise aus Gummi hergestellter Faltenbalg 10 angeordnet. Das Gelenkgehäuse 1 besitzt zur karosserieseitigen Befestigung einen Ansatz 11, welcher in der Figur 1 nur schematisch dargestellt ist.

Aus der Figur, 1 ist darüber hinaus ersichtlich, dass am Gelenkgehäuse 1 ein elektrischer Kontakt 12 angeordnet ist, der über eine geeignete Zuleitung an eine Potentialdifferenzmesseinrichtung 13 angeschlossen ist. Der Gelenkzapfen 2 weist an seinem Gewindeansatz 5 ebenfalls einen elektrischen Kontakt 14 auf, welcher ebenfalls mit der Potentialdifferenzmesseinrichtung 13 verbunden ist. Die Potentialdifferenzmesseinrichtung 13 ist in der Figur 1 als Blackbox dargestellt, da sie für den Fachmann in herkömmlicher Weise aus dem Stand der Technik darstellbar ist. An die Potentialdifferenzmesseinrichtung ist als weiteres elektrisches Bauteil eine Anzeigevorrichtung 15 angeschlossen. Um bei maximal ausgelenktem Gelenkzapfen eine elektrische Verbindung zwischen Gelenkzapfen 2 und Gelenkgehäuse 1 zu vermeiden, weist der Gelenkzapfen unterhalb der Gelenkkugel einen Kunststoffring 16 auf, der gleichzeitig den Faltenbalg 10 positioniert.

Aus der Gesamtdarstellung der Figur 1 wird deutlich, dass aufgrund der isolierenden Eigenschaften der Lagerschale 3, die üblicherweise aus einem Kunststoffmaterial hergestellt wird, eine elektrische Isolierung zwischen Gelenkzapfen 2 und Gelenkgehäuse 1 hergestellt ist. Die Darstellung der Figur 1 zeigt das Gelenkgehäuse im Neuzustand, in der die Lagerschale 3 ihre Isolierfunktion problemlos aufgrund der vorgegebenen Materialdicke erfüllen kann.

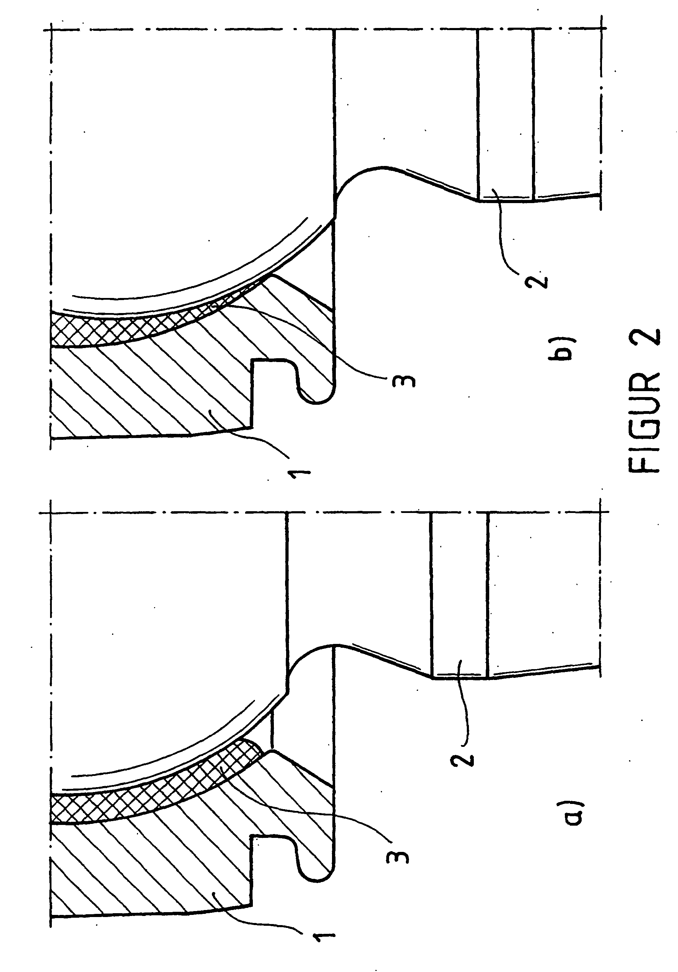

In der Figur 2a ist das Detail A der Figur 1 noch einmal vergrößert dargestellt, da im Bereich des Lagerschalenabschlusses häufig Verschleißprobleme eines Kugelgelenkes auftreten können. Die Bezifferung der Figuren 2a und b entspricht derjenigen der Figur 1. Es wird deutlich, dass in der Figur 2a die Lagerschale 3 aufgrund ihrer Dicke und ihrer Materialeigenschaften den Gelenkzapfen 2 gegenüber dem Gelenkgehäuse 1 vollständig elektrisch isoliert.

Dem gegenüber ist aus der Figur 2b ersichtlich, dass die Lagerschale aufgrund der Kugelgelenkbeanspruchung in ihrem Endbereich vollständig abgerieben ist, so dass sich die Oberflächen des Gelenkgehäuses 1 und des Gelenkzapfens 2 in diesem Bereich direkt berühren. Die direkte Berührung der beiden ursprünglich aufgrund der isolierenden Lagerschale mit einer Potentialdifferenz versehenen Bauteile führt zu einem Potentialausgleich, welcher von der Potentialdifferenzmesseinrichtung 13 registriert wird. Der Potentialdifferenzausgleich wird dann durch ein Steuersignal an die Anzeigevorrichtung gemeldet, welche dem Fahrzeugbenutzer die Notwendigkeit eines Austausches des Kugelgelenkes signalisiert. Es ist natürlich denkbar, dass die Lagerschale aus einem Material hergestellt ist, welches nicht vollständig isolierend wirkt. In diesem Falle würde durch die Potentialdifferenzmesseinrichtung bereits vor dem vollständigen Abrieb der Lagerschale aufgrund des Potentialausgleiches infolge der geringen Dicke der Lagerschale 3 ein Wert Δpₗᵢₑₘ der Potentialdifferenz unterschritten. Die Unterschreitung des Grenzwertes würde dann wie im vorher beschriebenen Anwendungsfall einer direkten Kontaktierung zwischen Gelenkzapfen 2 und Gelenkgehäuse 1 zu einer Ansteuerung der Anzeigevorrichtung führen. Eine derartige Ausführung hätte den Vorteil, dass bereits vor dem Erreichen der unmittelbaren Grenzlebensdauer des Kugelgelenkes ein Austausch des betreffenden Bauteiles vorgenommen werden könnte, was unter Sicherheitsaspekten sicherlich positiv zu bewerten ist.

Darüber hinaus ist es denkbar, in den Fällen, in denen die Lagerschale 3 ihre isolierende Funktion zwischen Gelenkzapfen 2 und Gelenkgehäuse 1 aufgrund notwendiger Materialauswahl nicht erfüllen kann, den Innenbereich des Gelenkgehäuses 1 oder die Lagerfläche des Gelenkzapfens 2 mit einer isolierenden Beschichtung zu versehen. Analog zu dem oben geschilderten Ausführungsbeispiel wäre hierbei die Verschleißgrenze dann erreicht, wenn die Beschichtung des Gelenkzapfens so weit abgerieben wäre, dass wiederum eine elektrische Verbindung zwischen den beiden Bauteilen gegeben wäre.

### Bezugszeichenliste:

- 1: Gelenkgehäuse
- 2: Gelenkzapfen
- 3 a,b: Lagerschale
- 4: Schaftteil
- 5: Gewindeansatz
- 6: karosserieseitige Träger
- 7: Gewindebuchse
- 8: Lagerfläche
- 9: Gehäusedeckel
- 10: Faltenbalg
- 11: Ansatz
- 12: elektrischer Kontakt
- 13: Potentialdifferenzmesseinrichtung
- 14: elektrischer Kontakt
- 15: Anzeigevorrichtung
- 16: Kunststoffring

## Patentansprüche

1. Kugelgelenk vorzugsweise für Fahrwerksaufhängungen oder Lenkungen von Kraftfahrzeugen mit einem Gelenkgehäuse und einem Gelenkzapfen, der mittels einer kugelförmigen Lagerfläche in einer ein- oder mehrteiligen Lagerschale dreh- und auslenkbar gelagert ist, wobei die Lagerschale ihrerseits im Gelenkgehäuse festgelegt ist und wobei Gelenkgehäuse oder Gelenkzapfen gegenüber der Fahrwerksaufhängung oder Lenkung elektrisch isoliert festgelegt sind,
**dadurch gekennzeichnet, dass** im Einbauzustand im Fahrzeug Gelenkgehäuse (1) und Gelenkzapfen (2) mittels elektrischer Kontaktierung (12, 14) an einer Potentialdifferenzmesseinrichtung (13) angeschlossen sind und die kugelförmige Lagerfläche des Gelenkzapfens (2) und ihre korrespondierende Gegenlagerfläche im Gelenkgehäuse (1) gegeneinander elektrisch isoliert ausgebildet sind.

2. Kugelgelenk nach Anspruch 1,
**dadurch gekennzeichnet, dass**
die zwischen Gelenkgehäuse (1) und Gelenkzapfen (2) angeordnete Lagerschale (3) aus elektrisch nicht leitendem Material besteht.

3. Kugelgelenk nach Anspruch 1,
**dadurch gekennzeichnet, dass**
die Lagerfläche des Gelenkzapfens (2) eine elektrisch nicht leitende Beschichtung aufweist.

4. Kugelgelenk nach einem der Ansprüche 1 bis 3,
**dadurch gekennzeichnet, dass**
die Potentialdifferenzmesseinrichtung (13) mit einer Anzeigeeinrichtung (15) gekoppelt ist, die bei Unterschreitung einer Potentialdifferenz Δpₗᵢₑₘ mit einem Steuersignal beaufschlagt wird.

## Claims

1. Ball joint, preferably for chassis suspensions or steering assemblies of motor vehicles, with a joint housing and a joint pin, which is mounted so as to be rotatable and deflectable in a one- or multi-part bearing shell by means of a spherical bearing face, wherein the bearing shell is in turn secured in the joint housing, and wherein the joint housing or joint pin is secured so as to be electrically isolated from the chassis suspension,
**characterised in that**
the joint housing (1) and the joint pin (2) are connected to a potential difference measuring device (13) by means of electrical contact (12, 14) when in the fitted state in the vehicle, and the spherical bearing face of the joint pin (2) and its corresponding counter-bearing face are formed so as to be electrically isolated from one another in the joint housing (1).

2. Ball joint according to Claim 1,
**characterised in that**
the bearing shell (3), which is disposed between the joint housing (1) and the joint pin (2), consists of electrically non-conducting material.

3. Ball joint according to Claim 1,
**characterised in that**
the bearing face of the joint pin (2) comprises an electrically non-conducting coating.

4. Ball joint according to any one of Claims 1 to 3,
**characterised in that**
the potential difference measuring device (13) is coupled to an indicator device (15) to which a control signal is applied in the event of a fall below a potential difference Δpₗᵢₑₘ.

## Revendications

1. Joint à rotule pour des suspensions de châssis ou pour des directions de véhicules automobiles comportant un boîtier du joint et un embout du joint, qui est monté de manière à pouvoir tourner et être dévié au moyen d'une surface de palier de forme sphérique dans un coussinet de palier formé d'une ou de plusieurs parties, le coussinet de palier étant fixé pour sa part dans le boîtier du joint, et le boîtier du joint ou l'embout du joint étant fixé de manière isolée électriquement par rapport à la suspension du châssis ou à la direction, **caractérisé en ce qu'**à l'état monté dans le véhicule, le boîtier (1) du joint et l'embout (2) du joint sont raccordés au moyen d'un contact électrique (12, 14) à un dispositif (13) de mesure de différence de potentiel et la surface de palier de forme sphérique de l'embout (2) du joint et la surface de palier antagoniste, qui lui correspond, dans le boîtier (1) du joint sont agencés en étant isolés électriquement l'une par rapport à l'autre.

2. Joint à rotule selon la revendication 1, **caractérisé en ce que** le coussinet de palier (3), qui est disposé entre le boîtier (1) du joint et l'embout (2) du joint, est constitué par un matériau non électriquement conducteur.

3. Joint à rotule selon la revendication 1, **caractérisé en ce que** la surface de palier de l'embout (2) du joint comporte un revêtement non électriquement conducteur.

4. Joint à rotule selon l'une des revendications 1 à 3, **caractérisé en ce que** le dispositif (13) de mesure de la différence de potentiel est couplé à un dispositif d'affichage (15) qui est chargé par un signal de commande lorsque la différence de potentiel tombe au-dessous d'une valeur Δpₗᵢₑₘ.
